# EUROPÄISCHE PATENTSCHRIFT

(11) **EP 2 491 262 B1**
(45) Veröffentlichungstag und Bekanntmachung des Hinweises auf die Patenterteilung: **22.03.2017**
(21) Anmeldenummer: 10768755.0
(22) Anmeldetag: 15.10.2010
(51) Int. Cl.: F16C 32/04

(54) **SUPRALEITENDES LAGER UND VERFAHREN ZU DESSEN MONTAGE**
SUPERCONDUCTING BEARING AND METHOD FOR ITS ASSEMBLY
PALIER SUPRACONDUCTEUR ET SON PROCÉDÉ DE MONTAGE

(30) Priorität: 20.10.2009 DE 102009049889
(43) Veröffentlichungstag der Anmeldung: 29.08.2012
(73) Patentinhaber: Schaeffler Technologies AG & Co. KG, 91074 Herzogenaurach (DE)
(72) Erfinder: GLÜCK, Stefan, 97424 Schweinfurt (DE)
(86) Internationale Anmeldenummer: PCT/EP2010/065501
(87) Internationale Veröffentlichungsnummer: WO 2011/048019

(56) Entgegenhaltungen:
- WO-A2-2010/094263
- DE-A1- 10 358 341
- JP-A- 5 026 296
- JP-A- 7 293 564
- JP-A- 7 312 885
- US-B1- 6 369 476

## Beschreibung

### Gebiet der Erfindung

Die Erfindung betrifft ein Verfahren nach Anspruch 1 zum Montieren eines supraleitenden Lagers.

Es sind supraleitende Lager bekannt, die einen zweiten Lagerring aufweisen, an dem ein zweites Korpus aus einem Typ-2-supraleitenden Material befestigt ist. In Gegenwart eines Magnetfeldes bilden sich in dem Typ-2-supraleitenden Material des zweiten Korpus Flussschläuche, sogenannte Vortizes, aus, die von einem supraleitenden Strom umflossen werden. Eine Verschiebung der Vortizes relativ zu dem diese anregenden Magnetfeld ist nur gegen einen mechanischen Widerstand möglich, so dass das Magnetfeld zusammen mit dem Typ-2-supraleitenden Material des zweiten Korpus an dem zweiten Lagerring eine sich selbst einstellende Lagerung ausbildet.

Aus der Praxis ist bekannt, das die Flussschläuche anregende Magnetfeld durch Permanentmagneten, durch normalleitende oder durch supraleitende Spulen bereitzustellen, die an einem ersten Lagerring des Lagers angeordnet sind. Nachteilig ist hierbei, dass sowohl Spulen als auch Permanentmagnete Magnetfelder von nur geringem Betrag zur Verfügung stellen können, insbesondere im Vergleich zu dem kritischen Magnetfeld des Materials des Typ-2-Supraleiters des zweiten Korpus unterhalb der Sprungtemperatur. Aufgrund des nur vergleichsweise geringen Magnetfeldes werden die grundsätzlich möglichen hohen Rückstellkräfte bzw. Haltekräfte des supraleitenden Lagers nur zu einem Teil erreicht.

WO2010/094263 A, nachveröffentlicht am 26. August 2010 und mit Priorität der am 17. Februar 2009 eingereichten DE 10 2009 009 126.2, beschreibt ein supraleitendes Lager, das ein erstes Korpus an einem ersten Lagerring und einen zweiten Lagerring mit einem zweiten Korpus umfasst, wobei die beiden Korpus aus Typ-2-supraleitenden Material bestehen, und wobei in das erste Korpus an dem ersten Lagerring ein äußeres Magnetfeld dauerhaft eingeprägt ist, wobei das zweite Korpus an dem zweiten Lagerring so montiert ist, dass das in das erste Korpus eingeprägte Magnetfeld sich zumindest teilweise in den Bereich des zweiten Korpus erstreckt. Die Verteilung der Flussschläuche in dem zweiten Korpus wird dabei durch das in das erste Korpus eingeprägte Magnetfeld bestimmt, dessen Struktur wiederum durch ein äußeres Magnetfeld eingestellt sein kann. Hinsichtlich der Durchführung der Montage des supraleitenden Lagers ist vorgesehen, dass zuerst das äußere Magnetfeld in das erste Korpus an dem ersten Lagerring eingeprägt wird, dann die beiden Lagerringe so montiert werden, dass das in das erste Korpus eingeprägte Magnetfeld das zweite Korpus zumindest teilweise durchsetzt. Da der erste Lagerring das erste Korpus mit dem eingeprägten Magnetfeld aufweist, wenn der zweite Lagerring montiert wird, kann sich die Montage des Lagers insgesamt als aufwendig erweisen. Da ein Supraleiter das äußere Magnetfeld nicht vollständig, sondern nur mit geringen Flussdichteverlusten übernimmt, können sich bei der Montage die Flussdichteverluste summieren, da die Flussdichteverluste bei der Durchführung des Verfahrens zweimal, nämlich bei der Magnetisierung des ersten Korpus durch das äußere Magnetfeld und dann bei der Magnetisierung des zweiten Korpus in dem Magnetfeld des ersten Korpus auftreten. Das nach diesem Verfahren montierte Lager weist dann eine geringere als die theoretisch mögliche Volumendichte des Magnetfeldes auf, so dass auch die Haltekräfte und die Steifigkeit des montierten Lagers herabgesetzt sind.

JP 07 312 885 A beschreibt einen Rotor mit einem Ausleger, in den eine erstes Korpus eines Supraleiters angeordnet ist, dem ein zweites Korpus eines zweiten Supraleiters gegenüberliegt, wobei das zweite Korpus als gestapelte Abfolge von Supraleitern und magnetischen Flussleitern ausgebildet ist, und wobei die gestapelte Abfolge auf einem Stator befestigt von einer Anregespule umgeben ist.

### Aufgabe der Erfindung

Es ist die Aufgabe der Erfindung, ein einfaches Verfahren zur Montage eines supraleitenden Lagers anzugeben, das eine hohe Volumendichte des Magnetfeldes in dem montierten Lager ermöglicht.

### Zusammenfassung der Erfindung

Diese Aufgabe wird erfindungsgemäß durch ein Verfahren gemäß Anspruch 1 gelöst.

Bei dem Verfahrensschritt des Montierens der beiden Lagerringe vor dem Einprägen des Magnetfeldes lassen sich die beiden Lagerringe leichter handhaben, insbesondere kann das Montieren bei Raumtemperatur mit noch magnetfeldfreien Lagerringen durchgeführt werden.

Der weitere Verfahrensschritt des gleichzeitigen Einprägens eines beide Korpus durchsetzenden äußeren Magnetfeldes in das erste Korpus und in das zweite Korpus vermindert die Flussdichteverluste, die nur einmal auftreten können, da das äußere Magnetfeld nur einmal und in beide Korpora gleichzeitig eingeprägt wird.

In einer bevorzugten Durchführung des Verfahrens ist vorgesehen, dass das äußere Magnetfeld durch eine Magnetisierungsvorrichtung bereitgestellt wird. Die Magnetisierungsvorrichtung umfasst in besonders bevorzugter Durchführung des Verfahrens eine Spule. Die Magnetisierungsvorrichtung ermöglicht eine auf das einzuprägende Magnetfeld abgestimmte Durchführung des Verfahrensschrittes des Einprägens des äußeren, durch die Magnetisierungsvorrichtung bereitgestellten Magnetfeldes in beide Korpora. Das äußere Magnetfeld kann durch einen Gleichstrom in der Spule bereitgestellt werden oder alternativ hierzu durch einen gepulsten Strom in der Spule. Das äußere Magnetfeld kann eingeprägt werden, solange mindestens eines der beiden Korpora noch nicht in den supraleitenden Zustand überführt wurde, oder durch Einschalten des Stromes der Spule bereitgestellt werden, während eines oder beide Korpora sich bereits im supraleitenden Zustand befinden. Es versteht sich, dass der Verfahrensschritt des gleichzeitigen Einprägens des äußeren Magnetfeldes in beiden Korpora auch in zwei oder mehr Teilschritten durchgeführt werden kann, wobei bei jedem Teilschritt das zuvor bereits eingeprägte Magnetfeld durch ein zusätzliches äußeres Magnetfeld verändert wird.

In einer bevorzugten Durchführung des Verfahrens ist vorgesehen, dass die Magnetisierungsvorrichtung, insbesondere die Spule, durch eine in dem Lager, insbesondere in einem der beiden Lagerringe, angeordnete Hohlwelle eingeführt wird. Das äußere Magnetfeld der Magnetisierungsvorrichtung tritt dann durch das Korpus der Hohlwelle hindurch in den zwischen den beiden Lagerringen befindlichen Zwischenraum, in dem die beiden Korpora aus dem Typ-2-supraleitenden Material angeordnet sind.

In einer hierzu alternativen oder ergänzenden bevorzugten Durchführung des Verfahrens ist vorzugsweise vorgesehen, dass die Magnetisierungsvorrichtung, insbesondere die Spule, zwischen die Lagerringe eingeführt wird. Hierbei ergibt sich der Vorteil, dass die Magnetisierungsvorrichtung, speziell die Spule, in räumliche Nähe zu den beiden Korpora verbracht werden kann, so dass in die Korpora jeweils ein Magnetfeld mit einer hohen Volumendichte eingeprägt werden kann und störende Einflüsse, wie beispielsweise durch das häufig paramagnetische Material der Welle des Lagers bzw. der Lagerringe, unterdrückt werden können.

In einer zu den beiden vorgenannten Möglichkeiten wiederum alternativen oder ergänzenden bevorzugten Durchführung des Verfahrens ist vorgesehen, dass die Magnetisierungsvorrichtung, insbesondere die Spule, beide Lagerringe umgebend angeordnet wird.

Weitere Vorteile und Merkmale der Erfindung ergeben sich aus den abhängigen Ansprüchen sowie aus der Beschreibung von bevorzugten Ausführungsbeispielen.

Die Erfindung wird im folgenden unter Bezugnahme auf die anliegenden Zeichnungen näher beschrieben und erläutert.

### Kurze Beschreibung der Zeichnungen

- Fig. 1: zeigt eine schematische Querschnittsansicht eines ersten Schrittes einer bevorzugten Durchführung des erfindungsge-mäßen Verfahrens bei der Montage eines bevorzugten Ausfüh-rungsbeispiels eines erfindungsgemäßen Lagers,
- Fig. 2: zeigt eine Querschnittsansicht des Lagers aus Fig. 1 bei der Durchführung eines zweiten Schrittes des erfindungsgemäßen Verfahrens,
- Fig. 3: zeigt eine Querschnittsansicht des gemäß der in Fig. 1 und Fig. 2 dargestellten bevorzugten Durchführung des erfindungsge-mäßen Verfahrens montierten Lagers,
- Fig. 4: zeigt eine schematische Querschnittsansicht eines zweiten Schrittes bei einer gegenüber der Darstellung von Fig. 2 abge-wandelten bevorzugten Durchführung des erfindungsgemäßen Verfahrens, und
- Fig. 5: zeigt eine schematische Querschnittsansicht eines zweiten Schrittes bei einer gegenüber den Darstellungen aus Fig. 2 und Fig. 4 wiederum abgewandelten bevorzugten Durchführung des erfindungsgemäßen Verfahrens.

### Detaillierte Beschreibung der Zeichnungen

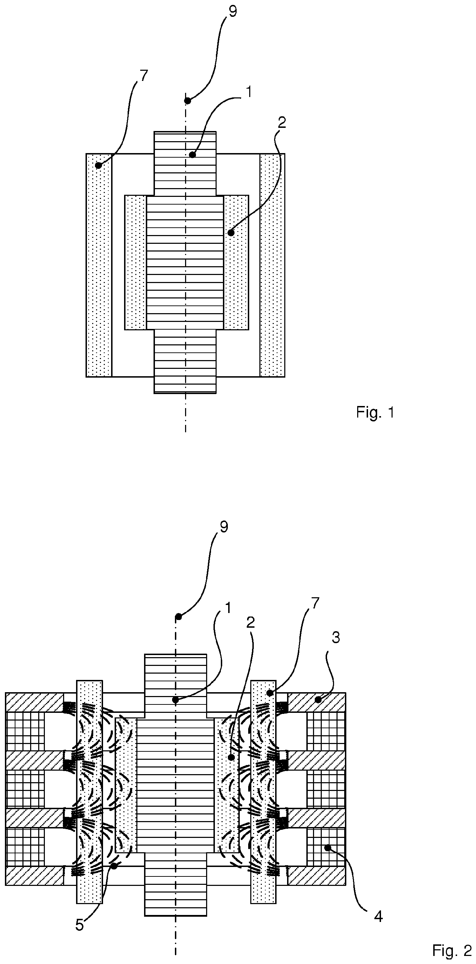

Fig. 1 zeigt einen ersten Lagerring 1 eines supraleitenden Lagers mit einem ersten Korpus 2 aus einem Typ-2-Supraleiter, der fest an einer äußeren Mantelfläche des ersten Lagerrings 1 befestigt ist. Das supraleitende Lager umfasst weiter einen bildlich nicht dargestellten zweiten Lagerring, an dessen innerer Mantelfläche ein zweites Korpus 7 aus einem Typ-2-Supraleiter befestigt ist. Das Material des Typ-2-Supraleiters ist für beide Korpora 2, 7 identisch. Es versteht sich aber, dass das erste Korpus 2 aus einem vom dem Material des zweiten Korpus 7 verschiedenen Material bestehen kann.

In einem ersten Schritt der Durchführung des Verfahrens zur Montage des supraleitenden Lagers mit dem ersten Lagerring 1 und dem ersten Korpus 2 sowie des zweiten Lagerrings mit dem zweiten Korpus 7 sind die beiden Lagerringe montiert worden. Die Korpora 2, 7 befinden sich im normalleitenden Zustand, so dass das Montieren der beiden Lagerringe bei Raumtemperatur durchgeführt wird.

Der erste Lagerring 1 kann bezogen auf eine Drehachse 9 des Lagers radial versetzt montiert werden und in dieser versetzten Stellung bei dem Durchführen des Montierens des Lagers mittels einer Hilfsvorrichtung gehalten werden, bis das Lager eine ausreichende Haltekraft erreicht hat und die Hilfsvorrichtung entfernt wird, so dass der erste Lagerring 1 in die vorgesehene Stellung gelangt, bei der die Symmetrieachse des ersten Lagerrings 1 mit der Drehachse 9 fluchtet. Es versteht sich, dass bei der Durchführung des Montierens der beiden Lagerringe der erste Lagerring 1 auch so angeordnet und in der Hilfseinrichtung gehalten werden kann, dass dieser einen Winkel mit der vorgesehenen Drehachse 9 einschließt.

Fig. 2 zeigt den zweiten Schritt des Verfahrens zum Montieren des Lagers, nämlich das gleichzeitige Einprägen eines beide Korpora 2, 7 durchsetzenden äußeren Magnetfeldes 5 in das erste Korpus 2 und in das zweite Korpus 7, wobei das äußere Magnetfeld 5 durch eine Magnetisierungsvorrichtung bereitgestellt wird, die eine Spule 4 umfasst.

Das von der stromdurchflossenen Spule 4 bereitgestellte Spulen-Magnetfeld wird über Flussleitstücke 3 geführt und als äußeres Magnetfeld 5 auf die montierten Lagerringe gerichtet, so dass beide Korpora 2, 7 gleichzeitig von dem äußeren Magnetfeld 5 durchsetzt werden. In einem späteren Teilschritt werden die Korpora 2, 7 abgekühlt, also unter die Sprungtemperatur des jeweiligen Typ-2-Supraleiters gekühlt, so dass das äußere Magnetfeld 5 in den jeweiligen Korpus 2, 7 eingeprägt ist.

In einem abschließenden Verfahrensschritt wird die Magnetisierungsvorrichtung mit der Spule 4 und den Flussleitstücken 3 entfernt, die Korpora 2, 7 aber in dem supraleitenden Zustand belassen, so dass in den Korpora 2, 7 supraleitende Ströme Flusslinien des eingeprägten Magnetfeldes umfließen und ein Abbild des an dem Ort des jeweiligen Korpus 2, 7 zuvor vorhandenen äußeren Magnetfeldes 5 nachzeichnen, das als eingeprägtes Magnetfeld 6 abschnittsweise zwischen den beiden Korpora 2, 7 vorhanden ist und die Haltekräfte sowie die Steifigkeit des Lagers bewirkt. Der Verlauf der Feldlinien des eingeprägten Magnetfeldes 6 zeichnet dabei im wesentlichen den Verlauf der Feldlinien des zuvor angelegten äußeren Magnetfeldes 5 nach.

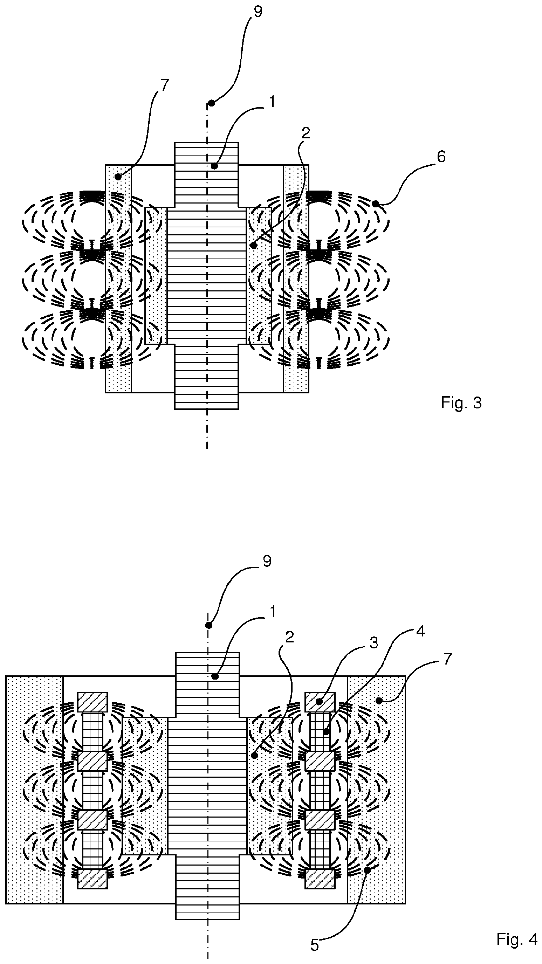

Ein derartiger Endzustand eines fertig montierten supraleitenden Lagers ist in Fig. 3 dargestellt.

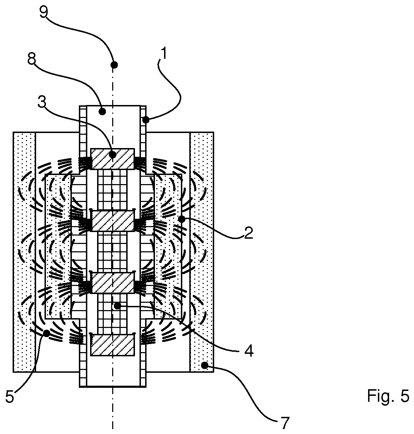

Fig. 4 und Fig. 5 zeigen jeweils alternative Durchführungen des zweiten Schritts des Verfahrens, nämlich alternative Möglichkeiten, das gleichzeitige Einprägen eines beide Korpus 2, 7 durchsetzenden äußeren Magnetfeldes 5 in das erste Korpus 2 und in das zweite Korpus 7 durchzuführen. Bei der folgenden Beschreibung sollen insbesondere die Unterschiede zu der oben, insbesondere anhand von Fig. 2 näher erläuterten Durchführung herausgestellt werden, wobei gleiche Bezugszeichen gleiche oder in ihrer technischen Wirkung vergleichbare Merkmale bezeichnen.

Bei dem oben, insbesondere anhand von Fig. 2 erläuterten Schritt der Durchführung des Verfahrens war die Magnetisierungsvorrichtung, insbesondere die Spule 4, beide Lagerringe 1 umgebend angeordnet.

Fig. 4 zeigt eine Durchführung des Schrittes des gleichzeitigen Einprägens eines beide Korpora 2, 7 durchsetzenden äußeren Magnetfeldes 5 in das erste Korpus 2 und in das zweite Korpus 7, wobei das äußere Magnetfeld 5 durch eine Magnetisierungsvorrichtung bereitgestellt wird und die Magnetisierungsvorrichtung, insbesondere die Spule 4 mit den Flussleitstücken 3 zwischen die Lagerringe 1 eingeführt wurde. Das äußere Magnetfeld befindet sich im wesentlichen radial mittig zwischen den Korpora 2, 7, so dass ein im wesentlichen spiegelsymmetrischer Verlauf der Feldlinien des äußeren Magnetfeldes 5 eingeprägt wird. Insbesondere ist das äußere Magnetfeld 5 auf den Bereich zwischen den beiden Korpora 2, 7 beschränkt, so dass kein wesentliches Magnetfeld in den radial außen liegenden Bereich außerhalb des zweiten Lagerrings austritt.

In einer weiteren Unterscheidung zu der oben, zu Fig. 2, erläuterten beispielhaften Durchführung des Verfahrens wurden die Korpora 2, 7 bei der Durchführung gemäß Fig. 4 zuerst unter die Sprungtemperatur der jeweiligen Typ-2-Supraleiter abgekühlt, bevor das äußere Magnetfeld 5 bereitgestellt wurde, bevor also die Spule 4 bestromt wurde. Hierzu wird die Spule 4 mit einem gepulsten Strom betrieben. In einer zu der vorbeschriebenen Durchführung alternativen Durchführung kann vorgesehen sein, mindestens eines der beiden Korpora 2, 7 in einem normalleitenden Zustand zu halten, dann die Spule zu bestromen, insbesondere mit einem Gleichstrom, und danach das mindestens eine der Korpora 2, 7 in den supraleitenden Zustand zu verbringen.

Fig. 5 zeigt eine zu den Darstellungen aus Fig. 2 und Fig. 4 alternative Durchführung des Schrittes des gleichzeitigen Einprägens eines beide Korpora 2, 7 durchsetzenden äußeren Magnetfeldes 5 in das erste Korpus 2 und in das zweite Korpus 7. Das äußere Magnetfeld 5 ist durch eine Magnetisierungsvorrichtung mit einer Spule 4 und Flussleitstücken 3 bereitgestellt worden. Dabei ist die Magnetisierungsvorrichtung, insbesondere die Spule 4, durch eine in dem Lager angeordnete Hohlwelle 8 eingeführt worden, wobei die Hohlwelle 8 in dem ersten Lagerring 1 aufgenommen ist.

Bei Bestromen der Spule 4 tritt das äußere Magnetfeld 5 durch die Hohlwelle 8 hindurch und durchsetzt die beiden Korpora 2, 7 gleichzeitig. Nachdem die Korpora 2, 7 unter die Sprungtemperatur des jeweiligen Typ-2-Supraleiters abgekühlt worden sind, wird das äußere Magnetfeld 5 als eingeprägtes Magnetfeld 6 in den Korpora 2, 7 fixiert und dauerhaft. Es versteht sich dabei, dass für das Einprägen des äußeren Magnetfeldes 5 auch vorgesehen sein kann, die Korpora 2, 7 zuerst unter die Sprungtemperatur des jeweiligen Typ-2-Supraleiters abzukühlen und danach das äußere Magnetfeld 5 der Magnetisierungsvorrichtung bereitzustellen.

Bei den vorstehend beschriebenen drei beispielhaften Durchführungen des Verfahrens war jeweils das Bestromen der Spule 4 der Magnetisierungsvorrichtung als einziger Teilschritt bei dem gleichzeitigen Einprägen eines beide Korpus 2, 7 durchsetzenden äußeren Magnetfeldes 5 in das erste Korpus 2 und in das zweite Korpus 7 vorgesehen. Es versteht sich, dass eine zeitliche Abfolge von mehreren äußeren Magnetfeldern 5 vorgesehen sein kann, um das in die Korpus 2, 7 eingeprägte Magnetfeld 6 auszubilden. Insbesondere lassen sich die oben zu Fig. 2, Fig. 4 und Fig. 5 beschriebenen Möglichkeiten kombinieren.

Bei den vorstehend beschriebenen Ausführungsbeispielen wurde die Spule 4 der Magnetisierungsvorrichtung jeweils mit Gleichstrom bestromt. Es versteht sich, dass die Spule 4 der Magnetisierungsvorrichtung nicht nur mittels Gleichstrom, sondern auch mittels eines zeitlich veränderlichen Stroms, insbesondere im Pulsbetrieb, bestromt werden kann, um das eingeprägte Magnetfeld 6 auszubilden.

### Bezugszeichenliste

- 1: erster Lagerring
- 2: erstes Korpus
- 3: Flussleitstück
- 4: Spule
- 5: Magnetfeld
- 6: eingeprägtes Magnetfeld
- 7: zweites Korpus
- 8: Bohrung
- 9: Drehachse

## Patentansprüche

1. Verfahren zum Montieren eines supraleitenden Lagers,
wobei das Lager einen ersten Lagerring (1) mit einem ersten Korpus (2) aus einem Typ-2-supraleitenden Material und einen zweiten Lagerring mit einem zweiten Korpus (7) aus einem Typ-2-supraleitenden Material umfasst, wobei das Verfahren die Schritte umfasst:
Montieren der beiden Lagerringe (1), und
gleichzeitiges Einprägen eines beide Korpora (2, 7) durchsetzenden äußeren Magnetfeldes (5) in das erste Korpus (2) und in das zweite Korpus (7).

2. Verfahren nach Anspruch 1, **dadurch gekennzeichnet, dass** das äußere Magnetfeld (5) durch eine Magnetisierungsvorrichtung (3, 4) bereitgestellt wird.

3. Verfahren nach Anspruch 2, **dadurch gekennzeichnet, dass** die Magnetisierungsvorrichtung eine Spule (4) umfasst.

4. Verfahren nach Anspruch 2 oder 3, **dadurch gekennzeichnet, dass** die Magnetisierungsvorrichtung, insbesondere die Spule (4), durch eine in dem Lager angeordnete Hohlwelle (8) eingeführt wird.

5. Verfahren nach einem der Ansprüche 2 bis 4, **dadurch gekennzeichnet, dass** die Magnetisierungsvorrichtung, insbesondere die Spule (4), zwischen die Lagerringe eingeführt wird.

6. Verfahren nach einem der Ansprüche 2 bis 5, **dadurch gekennzeichnet, dass** die Magnetisierungsvorrichtung, insbesondere die Spule, beide Lagerringe umgebend angeordnet wird.

## Claims

1. Method for assembling a superconducting bearing, wherein the bearing comprises a first bearing race (1) having a first body (2) made of a type 2 superconducting material and a second bearing race having a second body (7) made of a type 2 superconducting material, wherein the method comprises the steps of:
assembling the two bearing races (1) and
simultaneously applying to the first body (2) and the second body (7) an external magnetic field (5) permeating both bodies (2, 7).

2. Method according to Claim 1, **characterized in that** the external magnetic field (5) is provided by a magnetizing device (3, 4).

3. Method according to Claim 2, **characterized in that** the magnetizing device comprises a coil (4).

4. Method according to Claim 2 or 3, **characterized in that** the magnetizing device, in particular the coil (4) is introduced through a hollow shaft (8) arranged in the bearing.

5. Method according to one of Claims 2 to 4, **characterized in that** the magnetizing device, in particular the coil (4) is introduced between the bearing races.

6. Method according to one of Claims 2 to 5, **characterized in that** the magnetizing device, in particular the coil, is arranged surrounding the two bearing races.

## Revendications

1. Procédé de montage d'un palier supraconducteur, le palier comprenant une première bague de palier (1) avec un premier corps (2) en matériau supraconducteur de type 2 et une deuxième bague de palier avec un deuxième corps (7) en un matériau supraconducteur de type 2, le procédé comprenant les étapes suivantes :
montage des deux bagues de palier (1), et
gaufrage simultané d'un champ magnétique extérieur (5) traversant les deux corps (2, 7) dans le premier corps (2) et dans le deuxième corps (7).

2. Procédé selon la revendication 1, **caractérisé en ce que** le champ magnétique extérieur (5) est fourni par un dispositif de magnétisation (3, 4).

3. Procédé selon la revendication 2, **caractérisé en ce que** le dispositif de magnétisation comprend une bobine (4).

4. Procédé selon la revendication 2 ou 3, **caractérisé en ce que** le dispositif de magnétisation, en particulier la bobine (4), est introduit à travers un arbre creux (8) disposé dans le palier.

5. Procédé selon l'une quelconque des revendications 2 à 4, **caractérisé en ce que** le dispositif de magnétisation, en particulier la bobine (4), est introduit entre les bagues de palier.

6. Procédé selon l'une quelconque des revendications 2 à 5, **caractérisé en ce que** le dispositif de magnétisation, en particulier la bobine, est disposé de manière à entourer les deux bagues de palier.
